# DEMANDE DE BREVET EUROPEEN

(11) **EP 4 207 473 A1**
(43) Date de publication de la demande: **05.07.2023**
(21) Numéro de dépôt: 21306953.7
(22) Date de dépôt: 29.12.2021
(51) Int. Cl.: H01M 50/503, H01M 50/514, H01M 50/521

(54) **ENSEMBLE D'INTERCONNEXION DE CELLULES ÉLECTROCHIMIQUES ET PROCÉDÉ D'INSTALLATION ASSOCIÉ**

(71) Demandeur: Automotive Cells Company SE, 92300 Levallois Perret (FR)
(72) Inventeur: BAYLAC, Johan, 33800 BORDEAUX (FR); QUEYRENS, Mathieu, 33910 SAINT-DENIS-DE-PILE (FR); CHAUVEAU, Pierre, 33520 BRUGES (FR); LAATIAOUI, Najib, 33130 BEGLES (FR)
(74) Mandataire: Lavoix

(57) **Abrégé**

L'invention concerne un ensemble (110) d'interconnexion de cellules électrochimiques, comportant : une première (112) et une deuxième (114) cellules, chacune comprenant une borne (122, 124) ; et un dispositif d'interconnexion (116, 119).

Le dispositif d'interconnexion comprend : deux zones d'assemblage (130) ; et une zone de déformation (132) disposée entre deux extrémités.

Le dispositif d'interconnexion est déformable entre une configuration initiale et une configuration installée. Dans la configuration initiale, chacune des zones d'assemblage est emboîtée sur une borne de cellule avec un jeu initial ; et les extrémités de la zone de déformation sont à une distance initiale (172) ; et dans la configuration installée, chacune des zones d'assemblage assure un contact électrique avec la borne ; et les extrémités de la zone de déformation sont à une distance installée (174), inférieure à la distance initiale.

## Description

La présente invention concerne un ensemble d'interconnexion de cellules électrochimiques.

L'invention s'applique particulièrement à la fabrication de batteries de véhicules électriques ou hybrides.

Une cellule électrochimique comprend un électrolyte reçu dans une enveloppe externe fermée, en général de forme sensiblement parallélépipédique. La cellule électrochimique comprend généralement des bornes en contact avec l'électrolyte et fixées à l'enveloppe externe, à l'extérieur de ladite enveloppe.

Par exemple, la cellule électrochimique comprend un empilement d'électrodes positives reliées les unes aux autres et un empilement d'électrodes négatives reliées les unes aux autres, séparés par un séparateur. Un tel assemblage, connu sous le terme « stack », est reçu dans l'enveloppe externe.

Il est connu d'assembler en série et/ou en parallèle, une pluralité de cellules électrochimiques afin de réaliser des organes électriques tels que des modules ou des batteries électriques, à l'aide d'un dispositif d'interconnexion assurant un contact électrique entre les bornes de deux cellules voisines.

Les dispositifs d'interconnexion utilisés sont notamment des pièces électriquement conductrices qu'il est nécessaire de souder sur les bornes afin d'assurer un contact électrique optimal. Une telle méthode de connexion du module électrique nécessite ainsi des équipements coûteux et des risques de détérioration des cellules lors du procédé de soudage. De plus, cette méthode ne permet pas le démontage non destructif de l'ensemble en dissociant les cellules et le dispositif d'interconnexion.

Des systèmes démontables sont également connus mais n'offrent pas de résultats suffisants en termes de tenue mécanique ou de transmission de puissance électrique.

La présente invention a pour but de résoudre ces problèmes et de proposer un ensemble d'interconnexion simple à installer et à désinstaller, sans nécessiter de matériel coûteux.

A cet effet, l'invention a pour objet un ensemble d'interconnexion du type précité, ledit ensemble comprenant : une première et une deuxième cellule électrochimique, chacune desdites première et deuxième cellules comprenant une enveloppe externe et une borne en saillie par rapport à l'enveloppe externe ; et un dispositif d'interconnexion configuré pour mettre en connexion électrique les première et deuxième cellules dans une configuration installée de l'ensemble d'interconnexion. Le dispositif d'interconnexion comprend : une première et une deuxième zones d'assemblage; et au moins une première zone de déformation disposée entre une première et une deuxième extrémités, lesdites première et deuxième extrémités étant respectivement reliées à la première et à la deuxième zones d'assemblage. Le dispositif d'interconnexion est déformable entre une configuration initiale et la configuration installée de l'ensemble d'interconnexion, telles que, dans la configuration initiale, chacune des première et deuxième zones d'assemblage est emboîtée sur la borne de la première ou de la deuxième cellule avec un jeu initial ; et l'au moins une première zone de déformation est dans un état initial, dans lequel les première et deuxième extrémités sont à une distance initiale l'une de l'autre ; et dans la configuration installée, chacune des première et deuxième zones d'assemblage est emboîtée sur la borne de la première ou de la deuxième cellule avec un jeu d'installation assurant un contact électrique entre lesdites bornes, chaque jeu d'installation étant inférieur au jeu initial correspondant ; et l'au moins une première zone de déformation est dans un état installé dans lequel les première et deuxième extrémités sont à une distance installée l'une de l'autre, inférieure à la distance initiale.

Suivant d'autres aspects avantageux de l'invention, l'ensemble d'interconnexion comporte l'une ou plusieurs des caractéristiques suivantes, prises isolément ou suivant toutes les combinaisons techniquement possibles :
- le dispositif d'interconnexion comporte une bande métallique formant la première et la deuxième zone d'assemblage et l'au moins une première zone de déformation ;
- l'au moins une première zone de déformation comporte deux portions de déformation et une jonction disposée entre lesdites portions de déformation, chacune des portions de déformation s'étendant à partir de l'une des première et deuxième extrémités de l'au moins une première zone de déformation, et dans l'état installé de l'au moins une première zone de déformation, les portions de déformation sont inclinées l'une vers l'autre à partir de la jonction ;
- chacune des première et deuxième extrémités de l'au moins une première zone de déformation est une première charnière déformable et chaque portion de déformation est liée à la jonction par une deuxième charnière déformable ;
- dans la configuration initiale du dispositif d'interconnexion, chaque portion de déformation est sensiblement perpendiculaire à l'au moins une première zone de déformation ;
- le dispositif d'interconnexion présente une forme refermée sur elle-même, ledit dispositif d'interconnexion comprenant une deuxième zone de déformation disposée entre une troisième et une quatrième extrémités, lesdites troisièmes et quatrièmes extrémités étant respectivement reliées à la première et à la deuxième zone d'assemblage ;
- dans la configuration initiale, la deuxième zone de déformation est dans un état initial, dans lequel les troisièmes et quatrièmes extrémités sont à une distance initiale l'une de l'autre ; et dans la configuration installée, la deuxième zone de déformation est dans un état installé dans lequel les troisièmes et quatrièmes extrémités sont à une distance installée l'une de l'autre, inférieure à la distance initiale.

L'invention se rapporte en outre à un procédé d'assemblage de l'ensemble d'interconnexion tel que décrit ci-dessus, comprenant les étapes suivantes : emboîtement de chacune des première et deuxième zones d'assemblage du dispositif d'interconnexion sur la borne de la première ou de la deuxième cellule pour placer l'ensemble d'interconnexion dans la configuration initiale ; puis déformation plastique à température ambiante de l'au moins une première zone de déformation, de sorte à disposer l'ensemble d'interconnexion dans la configuration installée.

Suivant d'autres aspects avantageux de l'invention, l'étape d'emboîtement comprend une translation du dispositif d'interconnexion le long des bornes selon une première direction ; et la déformation plastique s'effectue dans une deuxième direction sensiblement perpendiculaire à ladite première direction.

L'invention se rapporte en outre à un module électrique comprenant : une première et une deuxième cellules électrochimiques, chacune desdites première et deuxième cellules comprenant une enveloppe externe et une borne en saillie par rapport à l'enveloppe externe ; et un dispositif d'interconnexion ; le dispositif d'interconnexion comprenant : une première et une deuxième zones d'assemblage ; et au moins une première zone de déformation disposée entre une première et une deuxième extrémités, lesdites première et deuxième extrémités étant respectivement reliées à la première et à la deuxième zones d'assemblage ; le dispositif d'interconnexion étant dans une configuration telle que chacune des première et deuxième zones d'assemblage est emboîtée sur la borne de la première ou de la deuxième cellule avec un jeu d'installation assurant un contact électrique entre lesdites bornes ; et l'au moins une première zone de déformation est dans un état installé dans lequel les première et deuxième extrémités sont à une distance installée l'une de l'autre ; l'organe électrique étant susceptible d'être issu d'un procédé tel que décrit ci-dessus.

Suivant d'autres aspects avantageux de l'invention, l'organe électrique comporte l'une ou plusieurs des caractéristiques suivantes, prises isolément ou suivant toutes les combinaisons techniquement possibles :
- chaque portion de déformation forme un angle aigu avec l'au moins une première zone de déformation ;
- l'angle aigu est supérieur ou égal à 5° et inférieur à 90° et préférentiellement compris entre 30° et 60°.

L'invention se rapporte en outre à un véhicule électrique ou hybride comprenant un tel organe électrique.

L'invention sera mieux comprise à la lecture de la description qui va suivre, donnée uniquement à titre d'exemple non limitatif et faite en se référant aux dessins sur lesquels :
- la figure 1 est une vue partielle de côté d'un ensemble d'interconnexion selon un premier mode de réalisation de l'invention, dans une première configuration ;
- la figure 2 est une vue en coupe partielle de l'ensemble de la figure 1, dans une deuxième configuration ;
- la figure 3 est une vue en perspective d'un élément de l'ensemble d'interconnexion des figures 1 et 2 ;
- la figure 4 est une vue partielle de dessus d'un ensemble d'interconnexion selon un deuxième mode de réalisation de l'invention ; et
- la figure 5 est une vue partielle de dessus d'un ensemble d'interconnexion selon un troisième mode de réalisation de l'invention.

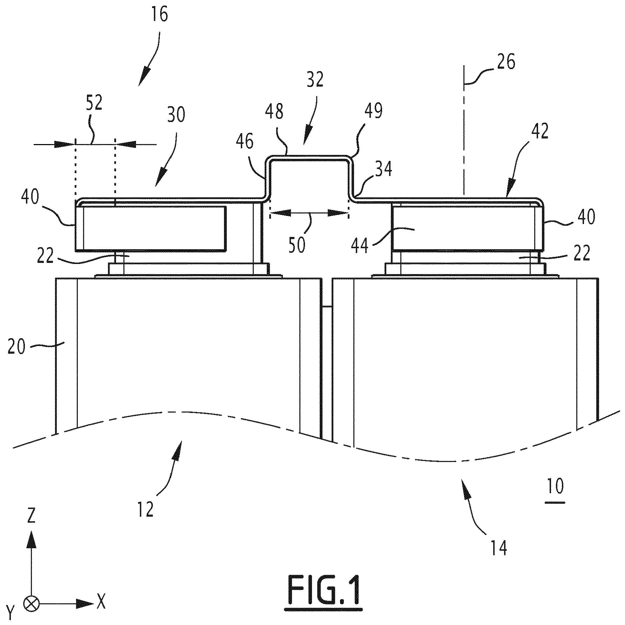

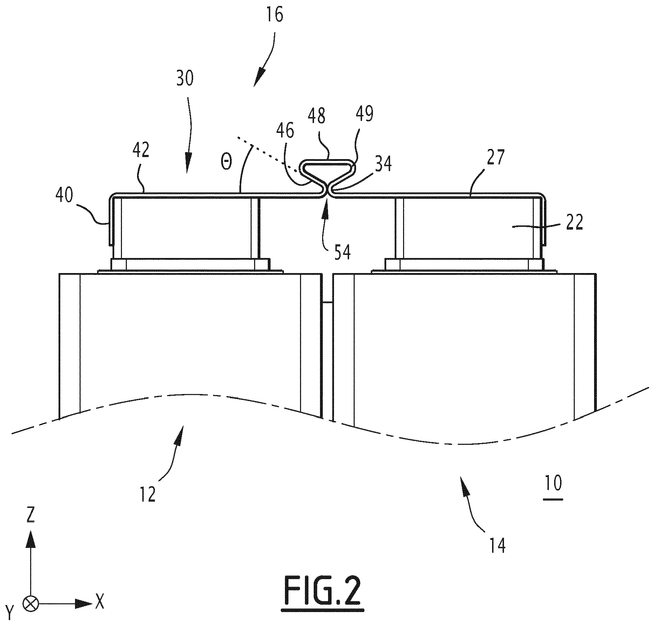

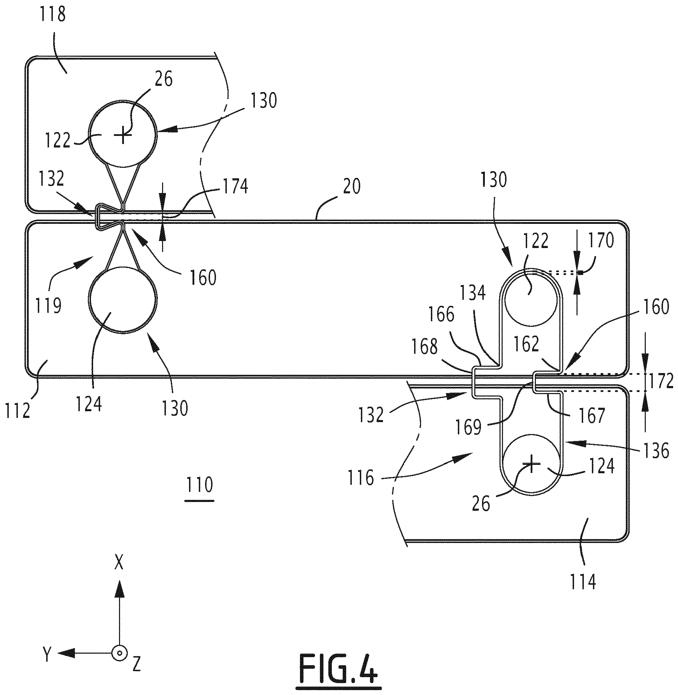

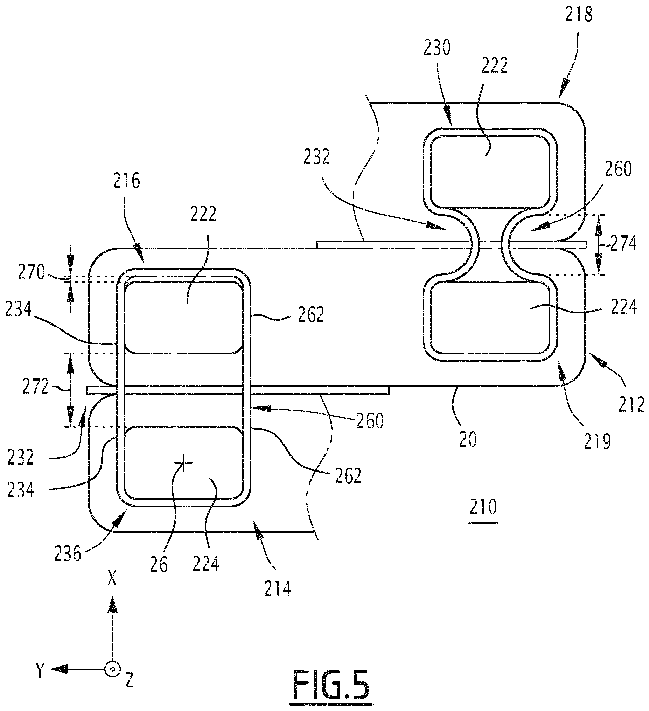

Les figures 1 et 2 montrent un ensemble 10 d'interconnexion selon un premier mode de réalisation de l'invention. La figure 4 et la figure 5 montrent respectivement un ensemble 110 et un ensemble 210 d'interconnexion, respectivement selon un deuxième et selon un troisième modes de réalisation de l'invention.

Les ensembles 10, 110 et 210 seront décrits simultanément ci-après, les éléments communs étant désignés par les mêmes numéros de référence.

L'ensemble 10, 110, 210 d'interconnexion comporte une première 12, 112, 212 et une deuxième 14, 114, 214 cellules électrochimiques et un dispositif d'interconnexion 16, 116, 216.

Le dispositif d'interconnexion 16, 116, 216 est destiné à mettre en connexion électrique les première 12, 112, 212 et deuxième 14, 114, 214 cellules, comme il sera décrit ci-après. D'une manière générale, l'invention est apte à mettre en connexion électrique une pluralité de cellules. Dans les modes de réalisation des figures 4 et 5, les ensembles 110 et 210 comprennent notamment une troisième cellule 118, 218 et un dispositif d'interconnexion supplémentaire 119, 219.

Dans la suite de la description, il est considéré que les cellules de chaque ensemble 10, 110, 210 sont identiques. Seule la première cellule 12, 112, 212 sera décrite ci-après.

La cellule 12, 112, 212 comprend une enveloppe externe 20 et au moins une première borne 22, 122, 222 disposée sur l'enveloppe externe. Typiquement, la cellule 12, 112, 212 comprend en outre une deuxième borne 124, 224 également disposée sur l'enveloppe externe 20, comme visible sur les figures 4 et 5.

L'au moins une première borne 22, 122, 222 forme une saillie par rapport à l'enveloppe externe 20. De préférence, l'au moins une première borne 22, 122, 222 comporte un corps sensiblement cylindrique s'étendant selon un axe 26. Dans les modes de réalisation des figures 1-2 et 5, le corps de la borne 22, 222 a une section sensiblement rectangulaire. Dans le mode de réalisation de la figure 4, le corps de la borne 122 a une section sensiblement circulaire. En variante non représentée, le corps de la borne a une section oblongue.

Dans le mode de réalisation des figures 1 et 2, le corps de la borne 22 comporte une extrémité libre 27 sensiblement plane.

Dans la suite de la description, il est considéré que la deuxième borne 124, 224 de chaque cellule des figures 4 et 5 a une forme similaire à la première borne 122, 222, les axes 26 des première et deuxième borne d'une même cellule étant préférentiellement parallèles.

Par ailleurs, dans la suite de la description, on considère que les première 122, 222 et deuxième 124, 224 bornes d'une même cellule sont de polarités opposées.

Dans la suite de la description, il est considéré que les dispositifs d'interconnexion supplémentaires 119 et 219 sont identiques respectivement aux dispositifs d'interconnexion 116 et 216 décrits ci-après.

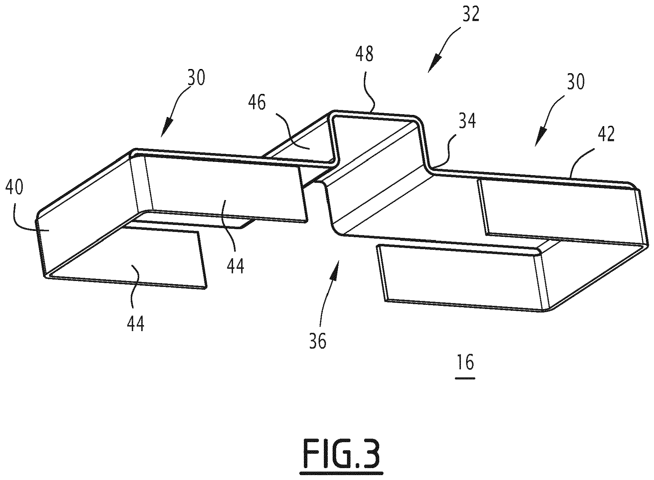

Le dispositif d'interconnexion 16, 116, 216 comprend: une première et une deuxième zones d'assemblage 30, 130, 230 ; et au moins une zone de déformation 32, 132, 232 disposée entre lesdites première et deuxième zones d'assemblage. Le dispositif d'interconnexion 16 des figures 1 et 2 est notamment représenté seul sur la figure 3, dans une configuration au repos sans contrainte extérieure.

Plus précisément, la zone de déformation 32, 132, 232 s'étend entre une première et une deuxième extrémités 34, 134, 234, lesdites première et deuxième extrémités étant respectivement reliées à la première et à la deuxième zones d'assemblage 30, 130, 230.

Le dispositif d'interconnexion 16, 116, 216 est déformable à la fois élastiquement et plastiquement. De préférence, le dispositif d'interconnexion comporte une bande métallique 36, 136, 236 formant au moins partiellement la première et la deuxième zones d'assemblage et l'au moins une zone de déformation.

Le dispositif d'interconnexion 16 des figures 1 à 3 va à présent être décrit plus précisément.

Chaque zone d'assemblage 30 comporte une butée 40 et une portion de liaison 42. Dans le mode de réalisation représenté, chaque zone d'assemblage 30 comporte en outre deux pattes latérales 44.

La butée 40 et la portion de liaison 42 sont dans le prolongement l'une de l'autre et formées par la bande métallique 36. Les butées 40 des première et deuxième zones d'assemblage 30 forment les deux extrémités de ladite bande métallique 36.

Les portions de liaison 42 sont planes et sensiblement coplanaires, chaque portion de liaison s'étendant jusqu'à une extrémité 34 de la zone de déformation 32. Les butées 40 sont planes et sensiblement parallèles. Chaque butée 40 forme un angle d'environ 90° avec la portion de liaison 42 adjacente.

Les pattes 44 sont solidaires de la butée 40 et s'étendent de part et d'autre de ladite butée le long de la portion de liaison 42 correspondante. La butée 40, la portion de liaison 42 et les pattes 44 forment ainsi sensiblement des faces d'un parallélépipède.

La zone de déformation 32 comporte une première et une deuxième portions de déformation 46, s'étendant respectivement à partir de la première et de la deuxième extrémités 34, et une jonction 48 disposée entre lesdites portions de déformation 46. Lesdites portions de déformation et la jonction 48 sont formées par la bande métallique 36.

Chaque extrémité 34 forme une charnière déformable entre une portion de déformation 46 et la portion de liaison 42 de la zone d'assemblage 30 adjacente. De même, chaque portion de déformation 46 est liée à la jonction 48 par une charnière déformable 49. Chacune desdites charnières déformables est matérialisée par un pli de la bande métallique 36.

Dans une première configuration du dispositif d'interconnexion 16, visible sur les figures 1 et 3, la zone de déformation 32 présente une section en U, les portions de déformation 46 étant sensiblement parallèles l'une à l'autre. Les extrémités 34 présentent une première distance 50 entre elles dans le plan des portions de liaison 42.

La figure 1 montre l'ensemble 10 dans une configuration initiale correspondant à une étape d'installation dudit ensemble. On considère une base orthonormée (X, Y, Z) associée audit ensemble.

Dans ladite configuration initiale, les première 12 et deuxième 14 cellules sont disposées côte à côte de sorte que les bornes 22 desdites cellules soient à proximité l'une de l'autre, les axes 26 desdites bornes étant sensiblement parallèles et les extrémités libres 27 desdites bornes étant sensiblement coplanaires. On considère que les première et deuxième cellules sont alignées selon X et que les axes 26 sont sensiblement parallèles à Z, les extrémités libres 27 étant disposées selon un plan (X, Y).

En outre, dans ladite configuration initiale, le dispositif d'interconnexion 16 en première configuration est emboîté sur les bornes 22. Plus précisément, chaque zone d'assemblage 30 est emboîtée sur l'une des bornes 22. La portion de liaison 42 est au contact de l'extrémité libre 27 et les pattes 44 sont au contact de faces latérales du corps de section rectangulaire de ladite borne 22.

En outre, dans le mode de réalisation représenté sur la figure 1, la butée de la deuxième zone d'assemblage 30 est en contact selon X avec la borne 22 de la deuxième cellule 14. En revanche, un jeu 52 est ménagé selon X entre la borne de la première cellule 12 et la butée 40 de la première zone d'assemblage. Par ailleurs, la première distance 50 entre les extrémités 34 de la zone de déformation 32 est mesurée selon X.

La figure 2 montre l'ensemble 10 dans une configuration installée, correspondant à une deuxième configuration du dispositif d'interconnexion 16.

Dans ladite deuxième configuration du dispositif d'interconnexion 16, la zone de déformation 32 présente une section sensiblement en triangle, les portions de déformation 46 étant inclinées l'une vers l'autre à partir de la jonction 48. Les extrémités 34 présentent une deuxième distance 54 entre elles selon X, ladite deuxième distance étant inférieure à la première distance 50.

Par ailleurs, dans la deuxième configuration, la butée 40 de la première zone d'assemblage 30 est en contact selon X avec la borne 22 de la première cellule 12.

Dans la deuxième configuration du dispositif d'interconnexion 16, chaque portion de déformation 46 forme un angle θ avec la portion de liaison 42 adjacente. De préférence, l'angle θ est supérieur ou égal à 5° et inférieur à 90°. Plus préférentiellement, l'angle θ est compris entre 30° et 60°.

Les dispositifs d'interconnexion 116 et 216 et les dispositifs d'interconnexion supplémentaires 119 et 219 des figures 4 et 5 vont à présent être décrits plus précisément.

Dans les modes de réalisation des figures 4 et 5, le dispositif d'interconnexion 116, 216 présente une forme refermée sur elle-même. Plus précisément, ledit dispositif d'interconnexion comprend une première 132, 232 et une deuxième 160, 260 zones de déformation. La deuxième zone de déformation 160, 260 est disposée entre deux extrémités 162, 262 respectivement reliées à la première et à la deuxième zones d'assemblage 130, 230. La première zone d'assemblage, la première zone de déformation, la deuxième zone d'assemblage et la deuxième zone de déformation se succèdent donc le long d'une boucle formée par la bande métallique 136, 236 du dispositif d'interconnexion 116, 216.

Chaque zone d'assemblage 130, 230 a une forme sensiblement en U, de sorte à épouser partiellement le contour cylindrique d'une borne 122, 124, 222, 224. Dans le mode de réalisation de la figure 4, chaque zone d'assemblage 130 a une section arrondie et dans le mode de réalisation de la figure 5, chaque zone d'assemblage 230 a une section sensiblement rectangulaire, pour correspondre à la borne 122, 124 ou 222, 224 correspondante.

Le dispositif 116 d'interconnexion de la figure 4 va être plus spécifiquement décrit.

Chacune des première 132 et deuxième 160 zones de déformation du dispositif 116 d'interconnexion comporte une première et une deuxième portions de déformation 166, 167 s'étendant respectivement à partir de la première et de la deuxième extrémités 134, 162. Chacune des première 132 et deuxième 160 zones de déformation comporte en outre une jonction 168, 169 disposée entre lesdites portions de déformation 166, 167. Lesdites portions de déformation et lesdites jonctions sont formées par la bande métallique 136.

Chaque extrémité 134, 162 forme une charnière déformable entre une portion de déformation 166, 167 et la zone d'assemblage 130 adjacente. De même, chaque portion de déformation 166, 167 est liée à la jonction 168, 169 par une charnière déformable. Chacune desdites charnières déformables est matérialisée par un pli de la bande métallique 136.

Dans une configuration au repos du dispositif 116, sans contrainte extérieure, la forme en U de chaque zone d'assemblage 130 présente des branches sensiblement parallèles. En outre, chacune des première 132 et deuxième 160 zones de déformation présente également une section en U, les portions de déformation 166, 167 d'une même zone de déformation étant sensiblement parallèles l'une à l'autre et perpendiculaires à la jonction 168, 169 correspondante. Chaque portion de déformation 166, 167 est sensiblement perpendiculaire à la zone d'assemblage 130 adjacente. Les première 132 et deuxième 160 zones de déformation sont sensiblement alignées parallèlement aux portions de déformation 166, 167, les concavités des sections en U étant orientées dans le même sens.

Les dimensions des portions de déformation 166 et de la jonction 168 de la première zone de déformation 132 sont légèrement supérieures aux dimensions des portions de déformation 167 et de la jonction 169 de la deuxième zone de déformation 160. Ainsi, en déformant élastiquement les zones d'assemblage 130, il est possible d'emboîter la première zone de déformation 132 sur la deuxième zone de déformation 160, les jonctions 168 et 169 étant au contact l'une de l'autre.

L'ensemble 110 de la figure 4 va être plus spécifiquement décrit.

La figure 4 montre l'ensemble 110 dans une configuration correspondant à une étape d'installation dudit ensemble pour un montage en série. On considère une base orthonormée (X, Y, Z) associée audit ensemble.

Les première 112, deuxième 114 et troisième 118 cellules sont disposées côte à côte selon la direction X, les première 122 et deuxième 124 bornes de chaque cellule étant alignées selon la direction Y. Les axes 26 des bornes sont parallèles à Z.

La première borne 122 de la première cellule 112 et la deuxième borne 124 de la deuxième cellule 114, de polarités opposées, sont à proximité l'une de l'autre. De même, la deuxième borne 124 de la première cellule 112 et la première borne 122 de la troisième cellule 118, de polarités opposées, sont à proximité l'une de l'autre.

Le dispositif 116 d'interconnexion est emboîté sur la première borne 122 de la première cellule 112 et sur la deuxième borne 124 de la deuxième cellule 114. Par ailleurs, le dispositif d'interconnexion supplémentaire 119, correspondant à la description ci-dessus du dispositif 116, est emboîté sur la deuxième borne 124 de la première cellule 112 et sur la première borne 122 de la troisième cellule 118.

Plus précisément, chaque zone d'assemblage 130 des dispositifs 116 et 119 est emboîtée sur l'une des bornes 122, 124, épousant partiellement le corps cylindrique de ladite borne.

Le dispositif 116 d'interconnexion est dans une première configuration, correspondant à une configuration initiale de l'ensemble 110.

Dans le mode de réalisation représenté, la deuxième borne 124 de la deuxième cellule 114 est en contact selon X avec la partie arrondie de la deuxième zone d'assemblage. Cependant, un jeu initial 170 est ménagé selon X entre la première borne 122 de la première cellule 112 et la première zone d'assemblage.

Un tel jeu initial 170 a pour but de faciliter l'emboîtement du dispositif 116 sur les bornes 122, 124. En variante, le jeu initial est quasiment nul et l'emboîtement est réalisé en déformant élastiquement les première 132 et deuxième 160 zones de déformation.

En outre, dans la configuration initiale de l'ensemble 110, les première 132 et deuxième 160 zones de déformation sont sensiblement alignées selon Y. Les extrémités 162 de la deuxième zone de déformation 160 présentent une première distance 172 selon X.

Le dispositif d'interconnexion supplémentaire 119 est représenté sur la figure 4 dans une deuxième configuration, correspondant à une configuration installée de l'ensemble 110.

Dans ladite deuxième configuration du dispositif d'interconnexion, les première 132 et deuxième 160 zones de déformation sont emboîtées l'une dans l'autre, les jonctions 168 et 169 étant au contact l'une de l'autre, chaque extrémité 134 de la première zone de déformation étant au contact d'une extrémité 162 de la deuxième zone de déformation.

Par ailleurs, chacune des première et deuxième zones de déformation 132, 160 présente une section sensiblement en triangle ou en trapèze, les portions de déformation 166, 167 étant inclinées l'une vers l'autre à partir de la jonction 168, 169. Les extrémités 162 de la deuxième zone de déformation présentent une deuxième distance 174 entre elles selon X, ladite deuxième distance étant inférieure à la première distance 172. Enfin, chaque zone d'assemblage 130 est en contact selon X avec la borne 122, 124 correspondante.

Le dispositif 216 d'interconnexion de la figure 5 va à présent être plus spécifiquement décrit.

Dans une configuration au repos du dispositif 216, sans contrainte extérieure, la forme en U de chaque zone d'assemblage 230 présente des branches sensiblement parallèles. En outre, chacune des première 232 et deuxième 260 zones de déformation présente une section sensiblement rectiligne. Dans ladite configuration au repos, la bande métallique 236 fermée du dispositif 216 d'interconnexion présente une section sensiblement rectangulaire.

L'ensemble 210 de la figure 5 va à présent être plus spécifiquement décrit.

La figure 5 montre l'ensemble 210 dans une configuration correspondant à une étape d'installation dudit ensemble pour un montage en série. On considère une base orthonormée (X, Y, Z) associée audit ensemble.

Les première 212, deuxième 214 et troisième 218 cellules sont disposées côte à côte selon la direction X, les première 222 et deuxième 224 bornes de chaque cellule étant alignées selon la direction Y. Les axes 26 des bornes sont parallèles à Z.

La première borne 222 de la première cellule 212 et la deuxième borne 224 de la deuxième cellule 214, de polarités opposées, sont à proximité l'une de l'autre. De même, la deuxième borne 224 de la première cellule 212 et la première borne 222 de la troisième cellule 218, de polarités opposées, sont à proximité l'une de l'autre.

Le dispositif 216 d'interconnexion est emboîté sur la première borne 222 de la première cellule 212 et sur la deuxième borne 224 de la deuxième cellule 214. Par ailleurs, le dispositif d'interconnexion supplémentaire 219, correspondant à la description ci-dessus du dispositif 216, est emboîté sur la deuxième borne 224 de la première cellule 212 et sur la première borne 222 de la troisième cellule 218.

Plus précisément, chaque zone d'assemblage 230 des dispositifs 216 et 219 est emboîtée sur l'une des bornes 222, 224, épousant partiellement le corps cylindrique de ladite borne.

Le dispositif 216 d'interconnexion est dans une première configuration, correspondant à une configuration initiale de l'ensemble 210.

Dans le mode de réalisation représenté, la deuxième borne 224 de la deuxième cellule 214 est en contact selon X avec la deuxième zone d'assemblage. Cependant, un jeu initial 270 est ménagé selon X entre la première borne 222 de la première cellule 212 et la première zone d'assemblage.

En outre, dans la configuration initiale de l'ensemble 210, les première 232 et deuxième 260 zones de déformation sont sensiblement parallèles et disposées selon X. Les extrémités 234 de la première zone de déformation 232 présentent entre elles une première distance 272 selon X, de même que les extrémités 262 de la deuxième zone de déformation 260.

Le dispositif d'interconnexion supplémentaire 219 est représenté sur la figure 5 dans une deuxième configuration, correspondant à une configuration installée de l'ensemble 110.

Dans ladite deuxième configuration du dispositif d'interconnexion, chacune des première 232 et deuxième 260 zones de déformation présente une forme sensiblement en C, les convexités desdits C étant orientées l'une vers l'autre. Chaque extrémité 234 de la première zone de déformation et chaque extrémité 262 de la deuxième zone de déformation épouse un angle du corps de section rectangulaire d'une borne 222, 224.

Les extrémités 234 de la première zone de déformation 232 présentent entre elles une deuxième distance 274 selon X, de même que les extrémités 262 de la deuxième zone de déformation 260. Ladite deuxième distance 274 est inférieure à la première distance 272.

Enfin, chaque zone d'assemblage 230 est en contact selon X avec la borne 222, 224 correspondante.

Comme illustré par les figures 4 et 5, l'invention permet ainsi de connecter une pluralité de cellules électrochimiques 112, 114, 118, 212, 214, 218 à l'aide d'une pluralité de dispositifs 116, 119, 216, 219 d'interconnexion. Est obtenu un organe électrique de type module/pack électrique ou batterie, apte à fournir ou à stocker de l'énergie avec une tension et/ou une capacité de multiplicité supérieure à la cellule unitaire.

Dans un tel organe électrique, chaque dispositif d'interconnexion est dans la deuxième configuration décrite ci-dessus et connecte électriquement deux bornes 22, 122, 124, 222, 224 de deux cellules différentes.

Dans les configurations installées des ensembles 10, 110, 210 des figures 2, 4 et 5, chaque zone d'assemblage 30, 130, 230 du dispositif 16, 119, 219 d'interconnexion, dans la deuxième configuration, exerce sur la borne 22, 122, 124, 222, 224 correspondante un effort orienté selon X, vers l'autre zone d'assemblage du dispositif d'interconnexion. Pour assurer un bon contact électrique entre les cellules reliées par le dispositif 16, 119, 219, ledit effort selon X correspond de préférence à une pression comprise entre 15 MPa et 25 MPa.

Un procédé d'assemblage de l'ensemble 10, 110, 210 d'interconnexion décrit ci-dessus va maintenant être décrit.

Tout d'abord, les cellules 12, 14, 112, 114, 118, 212, 214, 218 de l'ensemble concerné sont disposées côte à côte comme décrit ci-dessus à l'appui des figures 1-2, 4 et 5. Le nombre de cellules dépend de la taille souhaitée de l'organe électrique de type module ou batterie.

Chacune des première et deuxième zones d'assemblage du dispositif 16, 116, 119, 216, 219 d'interconnexion est ensuite emboîtée sur la borne 22, 122, 124, 222, 224 correspondante, pour placer l'ensemble 10, 110, 210 d'interconnexion dans la configuration initiale décrite ci-dessus.

Dans les modes de réalisation représentés, l'emboîtement s'effectue en translatant le dispositif 16, 116, 119, 216, 219 vers les bornes le long des axes 26 desdites bornes.

Ensuite est effectuée une étape de déformation plastique de la ou des zones de déformation 32, 132, 160, 232, 260.

Dans le mode de réalisation des figures 1 à 3, un membre d'un outil de serrage de type pince (non représenté) est mis en contact de chaque extrémité 34 de la zone de déformation, dans la configuration initiale de la figure 1. Les deux membres de l'outil sont ensuite rapprochés l'un de l'autre selon X, pour mettre en contact la butée 40 de la première zone d'assemblage 30 avec la borne 22 correspondante. Durant la déformation de la zone de déformation 32, la première zone d'assemblage 30 glisse selon X le long de la borne 22 de la première cellule 12, jusqu'au blocage de la butée 40 contre ladite borne. La poursuite du serrage de l'outil assure une mise en tension du dispositif 16 sur les bornes 22, ainsi qu'un contact électrique efficace en configuration installée.

Dans le mode de réalisation de la figure 4, à partir de la configuration initiale dans laquelle le dispositif 116 est représenté, les zones de déformation 132 et 160 sont d'abord rapprochées selon Y et emboîtées l'une sur l'autre en déformant élastiquement le dispositif. Un membre d'un outil de serrage de type pince (non représenté) est alors mis en contact de chaque extrémité 134 de la première zone de déformation 132. Les deux membres de l'outil sont ensuite rapprochés l'un de l'autre selon X, pour rapprocher à la deuxième distance 174 les extrémités 162 de la deuxième zone de déformation 160. Cette opération conduit au serrage des zones d'assemblage 130 autour des bornes 122, 124 correspondantes. Un contact électrique efficace est ainsi assuré en configuration installée, dans laquelle le dispositif d'interconnexion supplémentaire 119 est représenté.

Dans le mode de réalisation de la figure 5, à partir de la configuration initiale dans laquelle le dispositif 216 est représenté, un membre d'un outil de serrage de type pince (non représenté) est mis en contact de chaque zone de déformation 232, 260, approximativement à mi-distance des extrémités 234, 262. Les deux membres de l'outil sont ensuite rapprochés l'un de l'autre selon Y pour déformer plastiquement chaque zone de déformation 232, 260 d'une forme rectiligne à une forme en C. Cette opération conduit au rapprochement à la deuxième distance 274 des extrémités 234 et 262 de chaque zone de déformation, ainsi qu'au serrage des zones d'assemblage 230 autour des bornes 222, 224 correspondantes. Un contact électrique efficace est ainsi assuré en configuration installée, dans laquelle le dispositif d'interconnexion supplémentaire 219 est représenté.

De préférence, les étapes de déformation plastique des dispositifs 16, 116, 119, 216, 219 sont réalisées à température ambiante, c'est-à-dire sans chauffage préalable de la bande métallique 36, 136, 236 ou de l'outil de serrage. L'installation de l'ensemble 10, 110, 210 est donc effectuée dans des conditions de mise en œuvre simplifiées.

Lorsque chaque dispositif 16, 116, 119, 216, 219 d'interconnexion est dans la deuxième configuration décrite ci-dessus sur deux bornes de cellules adjacentes, les cellules sont électriquement reliées en série, formant notamment un module ou une batterie électrique. En variante non représentée, les cellules de l'ensemble 10, 110, 210 peuvent être montées en parallèle.

L'ensemble selon l'invention permet donc d'adapter facilement le nombre et la disposition des cellules d'un module ou d'une batterie électrique.

Les dispositifs 16, 116, 119, 216, 219 sont facilement dissociés des bornes correspondantes en déformant à nouveau chacun desdits dispositifs à l'aide d'outils simples, à température ambiante. Les cellules de l'ensemble peuvent ainsi être facilement réutilisées pour un nouvel assemblage.

## Revendications

1. Ensemble (10, 110, 210) d'interconnexion de cellules électrochimiques pour véhicule électrique ou hybride, ledit ensemble comprenant : une première (12, 112, 212) et une deuxième (14, 114, 214) cellules électrochimiques, chacune desdites première et deuxième cellules comprenant une enveloppe externe et une borne (22, 122, 124, 222, 224) en saillie par rapport à l'enveloppe externe ; et un dispositif d'interconnexion (16, 116, 216), configuré pour mettre en connexion électrique les première et deuxième cellules dans une configuration installée de l'ensemble d'interconnexion ;
l'ensemble étant **caractérisé en ce que** le dispositif d'interconnexion comprend : une première et une deuxième zones d'assemblage (30, 130, 230) ; et au moins une première (32, 132, 232) zone de déformation disposée entre une première et une deuxième extrémités (34, 134, 234), lesdites première et deuxième extrémités étant respectivement reliées à la première et à la deuxième zones d'assemblage ;
le dispositif d'interconnexion étant déformable entre une configuration initiale et la configuration installée de l'ensemble d'interconnexion, telles que, dans la configuration initiale, chacune des première et deuxième zones d'assemblage (30, 130, 230) est emboîtée sur la borne (22, 122, 124, 222, 224) de la première ou de la deuxième cellule avec un jeu initial (52, 170, 270) ; et l'au moins une première zone de déformation est dans un état initial, dans lequel les première et deuxième extrémités sont à une distance initiale (50, 172, 272) l'une de l'autre ; et dans la configuration installée, chacune des première et deuxième zones d'assemblage est emboîtée sur la borne de la première ou de la deuxième cellule avec un jeu d'installation assurant un contact électrique entre lesdites bornes, chaque jeu d'installation étant inférieur au jeu initial correspondant ; et l'au moins une première zone de déformation est dans un état installé dans lequel les première et deuxième extrémités sont à une distance installée (54, 174, 274) l'une de l'autre, inférieure à la distance initiale.

2. Ensemble d'interconnexion selon la revendication 1, dans lequel le dispositif d'interconnexion comporte une bande métallique (36, 136, 236) formant la première et la deuxième zone d'assemblage et l'au moins une première zone de déformation.

3. Ensemble (10, 110) d'interconnexion selon la revendication 1 ou la revendication 2, dans lequel l'au moins une première zone de déformation (32, 132) comporte deux portions de déformation (46, 166) et une jonction (48, 168) disposée entre lesdites portions de déformation, chacune des portions de déformation s'étendant à partir de l'une des première et deuxième extrémités de l'au moins une première zone de déformation, et dans l'état installé de l'au moins une première zone de déformation, les portions de déformation sont inclinées l'une vers l'autre à partir de la jonction.

4. Ensemble (10, 110) d'interconnexion selon la revendication 3, dans lequel chacune des première et deuxième extrémités (34, 134) de l'au moins une première zone de déformation est une première charnière déformable et chaque portion de déformation (46, 166) est liée à la jonction (48, 168) par une deuxième charnière déformable (49).

5. Ensemble (10) d'interconnexion selon la revendication 4, dans lequel, dans la configuration initiale du dispositif d'interconnexion, chaque portion de déformation (46) est sensiblement perpendiculaire à l'au moins une première zone de déformation.

6. Ensemble (110, 210) d'interconnexion selon l'une des revendications précédentes, dans lequel le dispositif d'interconnexion présente une forme refermée sur elle-même, ledit dispositif d'interconnexion comprenant une deuxième zone de déformation (160, 260) disposée entre une troisième et une quatrième extrémités (162, 262), lesdites troisième et quatrième extrémités étant respectivement reliées à la première et à la deuxième zones d'assemblage.

7. Ensemble d'interconnexion selon la revendication 5, dans lequel, dans la configuration initiale, la deuxième zone de déformation (160, 260) est dans un état initial, dans lequel les troisième et quatrième extrémités sont à une distance initiale (172, 272) l'une de l'autre ; et dans la configuration installée, la deuxième zone de déformation est dans un état installé dans lequel les troisième et quatrième extrémités sont à une distance installée (174, 274) l'une de l'autre, inférieure à la distance initiale.

8. Procédé d'assemblage de l'ensemble d'interconnexion selon l'une des revendications précédentes, comprenant les étapes suivantes : emboîtement de chacune des première et deuxième zones d'assemblage du dispositif d'interconnexion (16, 116, 119, 216, 219) sur la borne (22, 122, 124, 222, 224) de la première ou de la deuxième cellule pour placer l'ensemble d'interconnexion dans la configuration initiale ; puis déformation plastique à température ambiante de l'au moins une première zone de déformation (32, 132, 160 232, 260), de sorte à disposer l'ensemble d'interconnexion dans la configuration installée.

9. Procédé d'assemblage selon la revendication 8, dans lequel l'étape d'emboîtement comprend une translation du dispositif d'interconnexion (16, 116, 119, 216, 219) le long des bornes selon une première direction (Z) ; et la déformation plastique s'effectue dans une deuxième direction (X, Y) sensiblement perpendiculaire à ladite première direction.

10. Organe électrique comprenant: une première (12, 112, 212) et une deuxième (14, 114, 214) cellules électrochimiques, chacune desdites première et deuxième cellules comprenant une enveloppe externe et une borne (22, 122, 124, 222, 224) en saillie par rapport à l'enveloppe externe ; et un dispositif d'interconnexion (16, 116, 216) ;
le dispositif d'interconnexion comprenant : une première et une deuxième zones d'assemblage (30, 130, 230) ; et au moins une première (32, 132, 232) zone de déformation disposée entre une première et une deuxième extrémités (34, 134, 234), lesdites première et deuxième extrémités étant respectivement reliées à la première et à la deuxième zones d'assemblage ;
le dispositif d'interconnexion étant dans une configuration telle que chacune des première et deuxième zones d'assemblage est emboîtée sur la borne de la première ou de la deuxième cellule avec un jeu d'installation assurant un contact électrique entre lesdites bornes ; et l'au moins une première zone de déformation est dans un état installé dans lequel les première et deuxième extrémités sont à une distance installée (54, 174, 274) l'une de l'autre ;
l'organe électrique étant susceptible d'être issu d'un procédé selon la revendication 8 ou la revendication 9.

11. Organe électrique selon la revendication 10 prise en combinaison avec la revendication 5, dans lequel chaque portion de déformation (46) forme un angle (θ) aigu avec l'au moins une première zone de déformation.

12. Organe électrique selon la revendication 11, dans lequel l'angle (θ) aigu est supérieur ou égal à 5° et inférieur à 90° et préférentiellement compris entre 30° et 60°.

## Revendications modifiées

### Revendications modifiées conformément à la règle 137(2) CBE.

1. Ensemble (110, 210) d'interconnexion de cellules électrochimiques pour véhicule électrique ou hybride, ledit ensemble comprenant : une première (112, 212) et une deuxième (114, 214) cellules électrochimiques, chacune desdites première et deuxième cellules comprenant une enveloppe externe et une borne (122, 124, 222, 224) en saillie par rapport à l'enveloppe externe ; et un dispositif d'interconnexion (116, 216), configuré pour mettre en connexion électrique les première et deuxième cellules dans une configuration installée de l'ensemble d'interconnexion ;
le dispositif d'interconnexion comprenant : une première et une deuxième zones d'assemblage (130, 230) ; et au moins une première (132, 232) zone de déformation disposée entre une première et une deuxième extrémités (134, 234), lesdites première et deuxième extrémités étant respectivement reliées à la première et à la deuxième zones d'assemblage ;
le dispositif d'interconnexion étant déformable entre une configuration initiale et la configuration installée de l'ensemble d'interconnexion, telles que, dans la configuration initiale, chacune des première et deuxième zones d'assemblage (130, 230) est emboîtée sur la borne (122, 124, 222, 224) de la première ou de la deuxième cellule avec un jeu initial (170, 270) ; et l'au moins une première zone de déformation est dans un état initial, dans lequel les première et deuxième extrémités sont à une distance initiale (172, 272) l'une de l'autre ; et dans la configuration installée, chacune des première et deuxième zones d'assemblage est emboîtée sur la borne de la première ou de la deuxième cellule avec un jeu d'installation assurant un contact électrique entre lesdites bornes, chaque jeu d'installation étant inférieur au jeu initial correspondant ; et l'au moins une première zone de déformation est dans un état installé dans lequel les première et deuxième extrémités sont à une distance installée (54, 174, 274) l'une de l'autre, inférieure à la distance initiale ;
l'ensemble étant **caractérisé en ce que** :
- le dispositif d'interconnexion comportant une bande métallique présentant une forme de boucle refermée sur elle-même ; et
- ledit dispositif d'interconnexion comprend une deuxième zone de déformation (160, 260) disposée entre une troisième et une quatrième extrémités (162, 262), lesdites troisième et quatrième extrémités étant respectivement reliées à la première et à la deuxième zones d'assemblage, de sorte que la première zone d'assemblage, la première zone de déformation, la deuxième zone d'assemblage et la deuxième zone de déformation se succèdent le long de ladite boucle.

2. Ensemble (10, 110) d'interconnexion selon la revendication 1, dans lequel l'au moins une première zone de déformation (32, 132) comporte deux portions de déformation (46, 166) et une jonction (48, 168) disposée entre lesdites portions de déformation, chacune des portions de déformation s'étendant à partir de l'une des première et deuxième extrémités de l'au moins une première zone de déformation, et dans l'état installé de l'au moins une première zone de déformation, les portions de déformation sont inclinées l'une vers l'autre à partir de la jonction.

3. Ensemble (110) d'interconnexion selon la revendication 2, dans lequel chacune des première et deuxième extrémités (34, 134) de l'au moins une première zone de déformation est une première charnière déformable et chaque portion de déformation (46, 166) est liée à la jonction (48, 168) par une deuxième charnière déformable (49).

4. Ensemble d'interconnexion selon la revendication 3, dans lequel, dans la configuration initiale du dispositif d'interconnexion, chaque portion de déformation est sensiblement perpendiculaire à l'au moins une première zone de déformation.

5. Ensemble d'interconnexion selon l'une des revendications précédentes, dans lequel, dans la configuration initiale, la deuxième zone de déformation (160, 260) est dans un état initial, dans lequel les troisième et quatrième extrémités sont à une distance initiale (172, 272) l'une de l'autre ; et dans la configuration installée, la deuxième zone de déformation est dans un état installé dans lequel les troisième et quatrième extrémités sont à une distance installée (174, 274) l'une de l'autre, inférieure à la distance initiale.

6. Procédé d'assemblage de l'ensemble d'interconnexion selon l'une des revendications précédentes, comprenant les étapes suivantes : emboîtement de chacune des première et deuxième zones d'assemblage du dispositif d'interconnexion (116, 119, 216, 219) sur la borne (122, 124, 222, 224) de la première ou de la deuxième cellule pour placer l'ensemble d'interconnexion dans la configuration initiale ; puis déformation plastique à température ambiante de l'au moins une première zone de déformation (132, 160, 232, 260), de sorte à disposer l'ensemble d'interconnexion dans la configuration installée.

7. Procédé d'assemblage selon la revendication 6, dans lequel l'étape d'emboîtement comprend une translation du dispositif d'interconnexion (116, 119, 216, 219) le long des bornes selon une première direction (Z) ; et la déformation plastique s'effectue dans une deuxième direction (X, Y) sensiblement perpendiculaire à ladite première direction.

8. Organe électrique comprenant : une première (112, 212) et une deuxième (114, 214) cellules électrochimiques, chacune desdites première et deuxième cellules comprenant une enveloppe externe et une borne (122, 124, 222, 224) en saillie par rapport à l'enveloppe externe ; et un dispositif d'interconnexion (116, 216) ;
le dispositif d'interconnexion comprenant : une première et une deuxième zones d'assemblage (130, 230) ; et au moins une première (132, 232) zone de déformation disposée entre une première et une deuxième extrémités (134, 234), lesdites première et deuxième extrémités étant respectivement reliées à la première et à la deuxième zones d'assemblage ;
le dispositif d'interconnexion étant dans une configuration telle que chacune des première et deuxième zones d'assemblage est emboîtée sur la borne de la première ou de la deuxième cellule avec un jeu d'installation assurant un contact électrique entre lesdites bornes ; et l'au moins une première zone de déformation est dans un état installé dans lequel les première et deuxième extrémités sont à une distance installée (174, 274) l'une de l'autre ;
l'organe électrique étant susceptible d'être issu d'un procédé selon la revendication 6 ou la revendication 7.

9. Organe électrique selon la revendication 8 prise en combinaison avec la revendication 4, dans lequel chaque portion de déformation forme un angle (θ) aigu avec l'au moins une première zone de déformation.

10. Organe électrique selon la revendication 9, dans lequel l'angle (θ) aigu est supérieur ou égal à 5° et inférieur à 90° et préférentiellement compris entre 30° et 60°.
